# EUROPEAN PATENT SPECIFICATION

(11) **EP 0 425 230 B1**
(45) Date of publication and mention of the grant of the patent: **23.06.1993**
(21) Application number: 90311581.4
(22) Date of filing: 23.10.1990
(51) Int. Cl.: F16L 33/22, F16L 37/08

(54) **Pipe joint**
Rohrkupplung
Raccord pour tuyau

(30) Priority: 25.10.1989 JP 277950/89; 23.03.1990 JP 74292/90
(43) Date of publication of application: 02.05.1991
(73) Proprietor: NITTA MOORE COMPANY, Chuo-ku, Osaka (JP)
(72) Inventor: Shimada, Hasuki, Takaichi-gun, Nara (JP)
(74) Representative: Linn, Samuel Jonathan

(56) References cited:
- EP-A- 0 310 234
- DE-C- 872 904
- FR-A- 2 398 958
- US-A- 2 940 778
- US-A- 4 775 171

## Description

This invention relates to a joint for connecting piping.

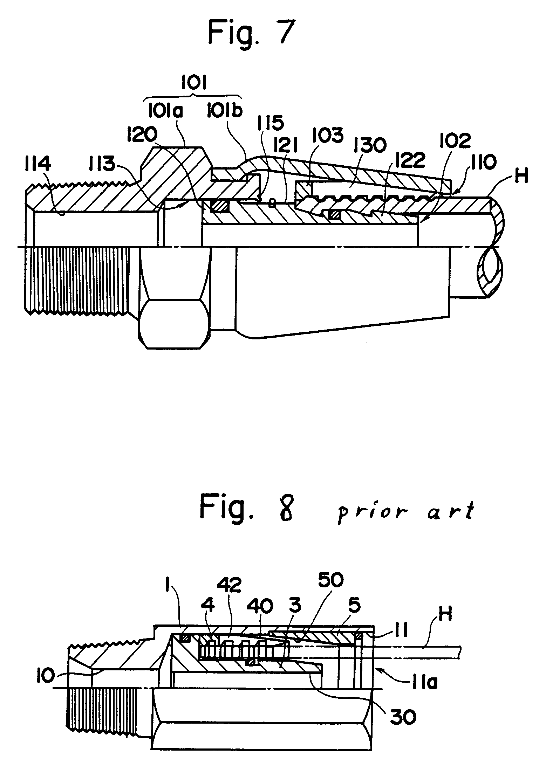

A known pipe joint, as shown in Fig. 8 for example, has a sleeve 5 with an inclined inner surface 50 disposed in a large-diameter end section 11 of a through bore of a nipple 1, the surface 50 inclining in such a way that its internal diameter diminishes toward an opening in the axial direction. Additionally, an insert 3 having a through bore 30 leading to a small-diameter bore section 10 of the nipple 1 is slidably mounted in said nipple 1, along with a collet 4. The latter has an external circumferential surface 40 capable of contacting the inclined surface 50 of the sleeve 5 and is designed to be expandable and contractible in diameter when sliding in the axial direction inside the sleeve 5.

It is only possible to fit the three members, namely the above-mentioned sleeve 5, insert 3 and collet 4 of the conventional pipe joint if the large-diameter bore section 11 of the nipple 1 is relatively wide so it is necessary to reduce the wall thickness around the large-diameter bore section to a great extent in machining of the nipple 1. As a result, the machining of the large-diameter bore section 11 of this nipple 1 presents problems of accuracy.

Moreover, a conventional pipe joint of the type described also has a problem of high cost because machining of the sleeve 5 requires cutting with a lathe or similar to provide the inclined internal circumferential surface 50 thereof.

Another problem with such a conventional pipe joint is that it cannot be reused because once a hose or pipe H is connected to the pipe joint, they cannot be separated from each other.

With reference to Fig. 8, this conventional type of pipe joint is constructed by installing the insert 3 coaxially and slidably within the cylindrical nipple 1, which has an external thread on one end, and by placing the collet 4 between the insert 3 and the nipple 1 in such a way as to allow the collet 4 to advance or retreat freely therein. When thus assembled it is designed to fix a pipe or hose H inserted between the insert 3 and the collet 4 in a non-detachable state by virtue of the holding force of those members.

For that purpose, the nipple 1 as a pipe inserting port 11a at one end, as shown in Fig. 8, and the tapered sleeve 5 with inner diameter diminishing toward that port 11a, is disposed just inside.

The collet 4 is constructed of resilient material and has an outside diameter slightly larger than the diameter of the pipe inserting port 11a so that it is a tight friction fit therein. It also has a slit 42 in its circumferential wall which opens towards the pipe inserting port 11a.

The gap between the collet 4 and the insert 3 is slightly smaller than the thickness of the pipe or hose H to be connected to the nipple 1. Consequently inserting a pipe forcibly through the pipe inserting port 11a and between the collet 4 and the insert 3 and then pulling the pipe causes the collet 4 and the insert 3 to move toward the pipe inserting port 11a together with the pipe. Once the collet 4 makes contact with the inclined surface 50, a pressing force from the tapered sleeve 5 acts on the collet 4 in a direction to reduce its diameter and, as a result, the holding power of the pipe by the collet 4 and the insert 3 increases and the pipe is secured in a non-detachable manner.

This pipe joint is very convenient in that a pipe can be very easily connected just by being inserted through the pipe inserting port 11a and then pulled backwards.

However, with the above-mentioned type of pipe joint, there is a risk that if the collet 4 gets worn after a long period of use it may be broken when a connected pipe is pushed therein. If that happens, a stable connecting force cannot be maintained when the pipe is pulled backwards again.

With the foregoing in mind, it is an object of the present invention to provide a pipe joint which is relatively simple to produce and at low cost.

Another object of the invention is to provide a pipe joint from which a pipe or hose can be separated after being connected thereto, thereby enabling reuse of the pipe joint.

A further object of the invention is to provide a pipe joint which not only solves the aforementioned problems but also enables a pipe to be connected in a stable state wherein the pipe is prevented from moving in spite of a pressing force on the pipe.

A pipe joint comprising a cylindrical body which has both ends open and is formed by two parts, a first part providing a connecting section at one end of the body and a second part in the form of a socket element provided at the end of the first part remote from the connecting section and providing a pipe insertion port at the other end of the body, the second part also being provided with a tapering internal surface diminishing in diameter toward the pipe insertion port, a cylindrical insert slidably retained within the body and, a collet disposed between the diminishing internal diameter surface and the insert in such a way as to slide freely to and fro, a gap remaining between the collet and the insert for reception and retention of the end margin of a pipe (H) when inserted therein through the insertion port is disclosed in prior specification No. FR-A-2398958 (equivalent to GB-A-1603670).

With this construction of pipe joint it is no longer necessary to reduce the thickness of the body since the socket element is provided as a separate part which is attached to the first part of body, and the socket element can be manufactured by drawing out a section of pipe material.

The pipe joint of the present invention is distinguished from that disclosed in the above-referenced prior art in that the insert is slidable within a predetermined range in the first part which has an inwardly projecting part at its end facing the pipe insertion port to prevent removal of the insert therefrom.

Advantageously, the first part of the body is in the form of a nipple having a through bore with a small-diameter section and a large-diameter section as well as a circumferential groove on its external surface to which the socket element is attached, and the insert is slidably retained in the large-diameter section of the nipple bore with a sealing member arranged therebetween, the insert itself having a through bore in alignment with the small-diameter bore section of the nipple.

Again, with this construction it is unnecessary to reduce the thickness of the large-diameter part of the bore of the nipple since the socket element is attached as a separate part to the large-diameter side of the nipple, and the collet is arranged inside the socket element.

The socket element is advantageously detachable from the first part of the body, whether in the form of a nipple or otherwise, so that effective re-use is possible.

In other advantageous embodiments of the pipe joint of the invention a C-type snap ring is accommodated in a groove in the external surface of the insert, the outside diameter of the snap ring, in its uncompressed state, being larger than the large-diameter bore section of the nipple thereby preventing the insert sliding back into the nipple once it has moved towards the pipe insertion port sufficiently to release the snap ring from the bore.

Specific embodiments of the invention will now be described by referring to the accompanying drawings, in which:
Figs. 1a and 1b depict a first embodiment of the pipe joint of the present invention, in partial longitudianl section, Fig. 1a showing the pipe joint before a pipe is connected, and Fig. 1b showing the positions taken up by the parts when an internal pressure is applied to the connected pipe;
Figs. 2a, 2b and 2c depict a second embodiment of the pipe joint of the present invention also in partial longitudinal section, Fig. 2a showing a pipe connected to the pipe joint, Fig. 2b showing the operation of detaching the pipe joint from the pipe and Fig. 2c showing the pipe joint and the pipe once separated;
Fig. 3 is a partial cross-sectional view of a third embodiment of the pipe joint of the present invention; Figs. 4a, 4b, and 4c are enlarged fragmentary views showing the relation between the large-diameter hole of the nipple and the C-type snap ring in the Fig. 3 embodiment;
Fig. 5 is a plan view of the C-type snap ring;
Fig. 6 is a partial cross-sectional view of a collet used in the pipe joint of Fig. 3;
Fig. 7 is a view similar to Fig. 3 illustrating the positions of the parts when a pipe is connected to the third embodiment of pipe joint; and
Fig. 8 is a partial cross-sectional view of a conventional pipe joint of the prior art, as already described.

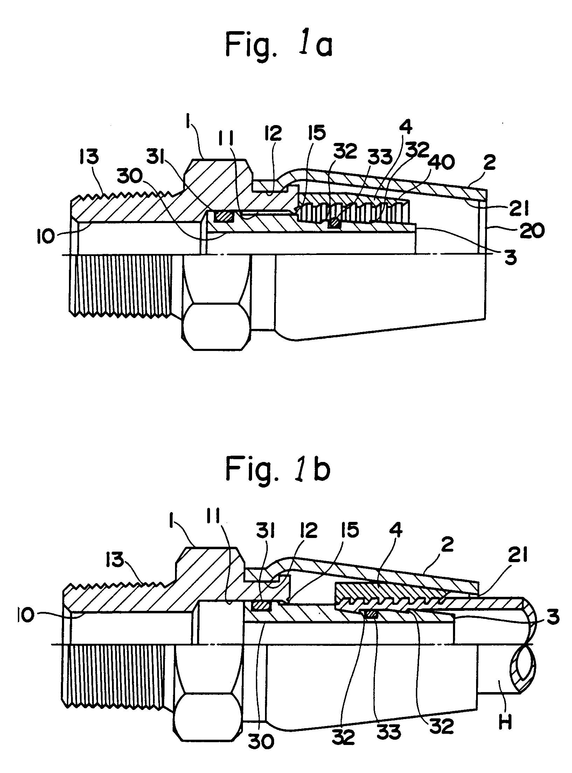

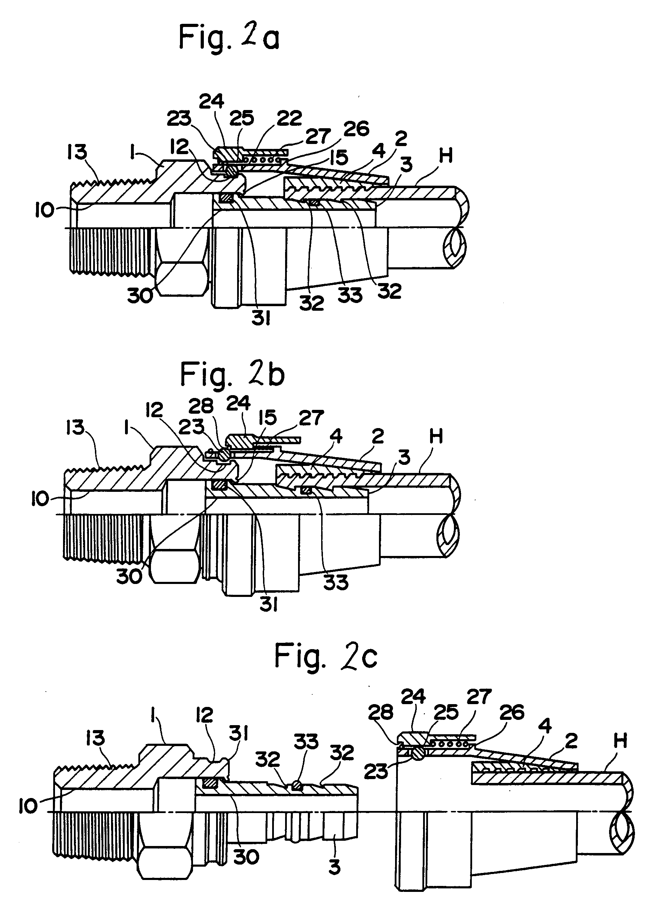

As indicated in Figs. 1 and 2 of the drawings, a pipe joint in accordance with the present invention comprises a main body in the form of a nipple 1, a socket element 2, an insert 3 and a collet 4.

The nipple 1 has a through bore with a small-diameter section 10 and a large-diameter section 11. Externally, it has a circumferential groove 12 around one end, namely the end with the large diameter bore 11, and an external thread 13, constituting a connecting section at the other end, i.e. of the small-diameter bore 10. The nipple 1 also has an inwardly projecting annular lip 15 at the end of its large-diameter bore 11 remote from the small diameter section 10 of the bore to prevent removal of the insert 3, as will be described.

The socket element 2 is fixed to the circumferential groove 12 of the nipple 1 and has tapered walling providing an internal surface 21 inclined in such a way that the internal diameter diminishes towards an opening 20 at the free end of the element 2. By caulking, the socket element 2 can be fixed inseparably to the circumferential groove 12 of the nipple 1, as is the case in the embodiment of Fig. 1.

In the embodiment shown in Fig. 2, at the time of connection of the socket element 2 to the nipple 1 (see Fig. 2a), a ball 23 of a diameter larger than the thickness of the socket element 2 is inserted in a hole 22 formed near to the end of the socket element 2 being connected to the nipple 1 and by location thereover of an external sleeve 24 it is pressed into the circumferential groove 12 of the nipple 1. The external sleeve 24 is itself urged toward the nipple 1 by the elastic force of a spring 27 which acts between an inwardly protruding part 25 of the sleeve 24 and an external annular ridge 26 of the socket 2. To separate the socket element 2 from the nipple 1 (see Fig. 2b,) the external sleeve 24 is pulled back toward the socket element 2 against the elastic force of the spring 27 so that the ball 23 is able to emerge from the circumferential groove 12 of the nipple 1 into a recess 28 in the inner surface of the sleeve 24. Thus, with this embodiment the socket element 2 and the nipple 1 are separable at a later stage, wherever necessary.

Manufacture of the socket element 2 from a section of metal pipe or from other pipe material of equivalent strength cuts down overall production costs for the joint compared to previously known joints of comparable type. In this respect, drawing of the pipe material to form the tapered internal surface 21 requires no troublesome machining of the type needed to form a tapered insert 5 (Fig. 8).

One end of the insert 3 is slidably fitted into the large-diameter bore section 11 of the nipple 1, and a sealing member 31 in the form of an O ring seals the gap between the insert 3 and the wall of the large-diameter bore section 11.

The insert 3 itself has a through bore 30 which, when the insert is thus mounted, is aligned with and leads to the small-diameter bore section 10 of the nipple 1. In its region extending from the nipple 1, the insert 3 has, on its external circumferential face annular ribs 32 to facilitate retention of a pipe or hose H and another O ring 33 to seal the gap between the insert 3 and any pipe or hose H which is connected.

The collet 4 has an external circumferential surface 40 which tapers at one end and is designed to contact the tapered inner surface 21 of the socket element 2 and to be expandable and contractible in diameter when sliding in the axial direction inside the socket element 2. The inside diameter of this collet 4 should be smaller than the normal outside diameter of any pipe or hose H to be connected and has a series of annular grooves and ribs for preventing removal of a pipe or hose H once connected thereto. In order to allow the collet 4 to be expandable and contractible in the socket element 2 while sliding in the axial direction, it may be provided with several slits extending in the axial direction. However, the collet is not limited to that structure.

To assemble the pipe joint of the above-mentioned construction, first of all, the relevant end of the insert 3 carrying the sealing member 31 is inserted into the large-diameter bore 11 of the nipple 1 until its end abuts the opening of the small-diameter bore 10. Then the collet 4 is placed around the free end of the insert 3 with its end abutting the opening of the large-diameter bore 11 of the nipple 1. Finally the socket element 2 is fitted to the circumferential groove 12 of the nipple 1.

To connect a pipe or hose H to such a pipe joint, the pipe or hose H is inserted through the opening 20 of the socket element 2 and between the external circumferential surface of the insert 3 and the internal circumferential surface of the collet 4 until the end of the pipe or hose H makes contact with the end of the nipple defining the opening of the large-diameter bore 11 thereof. When internal pressure is applied to the pipe or hose H, as shown in Fig. 1b, the insert 3 slides through the large-diameter bore 11 of the nipple 1 toward the opening 20 of the socket element 2. At the same time, as the pipe or hose H also moves toward the opening 20 of the socket element 2 together with the collet 4, the external circumferential surface 40 of the collet 4 contacts the tapered face 21 of the socket and is thereby caused to contract in diameter. The end portion of the pipe or hose H is thus tightly secured between the internal circumferential surface of the collet 4 and the external circumferential surface of the insert 3.

Although in the illustrated embodiments the main body of the joint is in the form of a nipple 1, the invention is not limited thereto and it may be formed by a different type of fitment.

In the embodiments of Fig. 1 the socket element 2 is fitted to the nipple 1 by caulking but again this is not to be considered limiting and connection could be achieved in any other convenient manner, such as screwing.

Also, in the above embodiment, the shoulder between the small-diameter bore 10 and the large-diameter bore 11 is used to prevent the insert 3 from being pushed too far into the nipple. Other arrangements are possible in other embodiments within the invention. For example, a nipple having a through bore of even diameter may be provided with a C type ring or formed with an internal projection intermediate its ends, in its central region. In such arrangements relative to the place where the insert 3 is prevented from being pushed in excessively, the internal circumference of the insert 3 side of the nipple 1 is considered to be the large-diameter bore 11 and from the point where the insert 3 makes contact it is considered as the small-diameter bore 10.

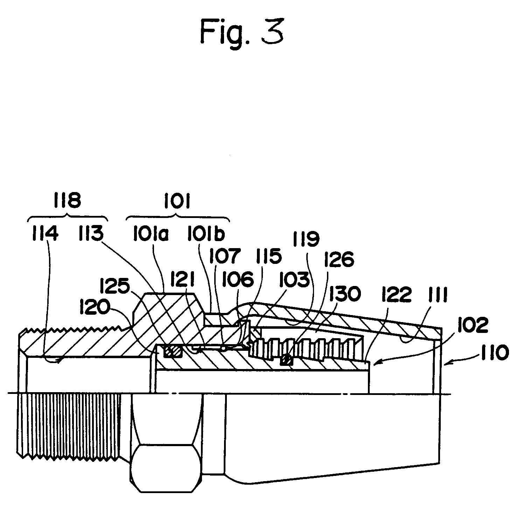

The further specific embodiment of the pipe joint of the invention, as illustrated in Figs. 3 to 7 is very similar to that shown in Fig. 1, despite the use of different reference numerals.

The pipe joint comprises a cylindrical main body 101 with both ends open, a slidable cylindrical insert 102, and a cylindrical collet 103 disposed between the main body 101 and the insert 103, so as to move freely to and fro.

The main body 101 is constructed by caulking a socket element 101b onto one end of a nipple 101a, the tip of the socket element 101b defining a pipe insertion port 110.

The nipple 101a is constructed to have a throughbore 118 with a large-diameter section 113 and a small-diameter section 114 and an internal projection 115, inclining towards the pipe insertion port 110, is formed at the end of the large-diameter bore 113 connecting to the socket 101b.

The socket 101b is formed in a cylindrical shape with a certain thickness, then, as shown in Fig. 3, a tapered internal surface 111 is provided adjacent the pipe inserting port 110, by diminishing the diameter of the socket element 101b toward the port.

The insert 102 has a large-diameter part 120, a medium-diameter part 121 and a small-diameter part 122, consecutively, as shown in Fig. 3, and the large-diameter part 120 is fitted into the large-diameter bore section 113 of the nipple 101a.

The large-diameter part 120 of the insert 102 is slightly smaller in diameter than the large diameter bore section 113 of the nipple 101a and is provided on its external circumferential surface with a groove 125 in which an O ring is fitted to maintain an airtight seal between the large-diameter part 120 of the insert 102 and the large diameter bore 113 of the nipple 101a.

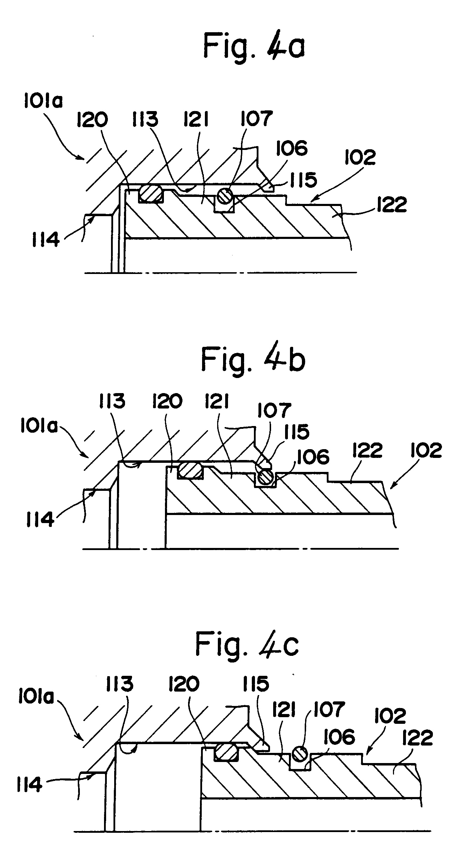

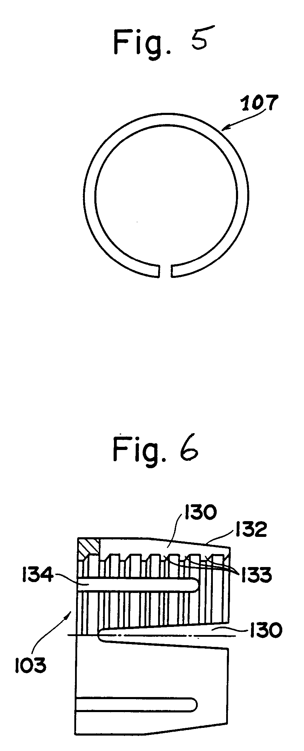

The medium-diameter part 121 of the insert 102 has an outside diameter slightly smaller than the inside diameter of the internal projection 115, as shown in Figs. 3 and 4, and is provided with a groove 106, about midway along its length, housing a C type snap ring 107 which is shaped as shown in Fig. 5 and is of circular cross-section.

The outside diameter of the C type snap ring is slightly smaller than the inside diameter of the large-diameter bore 113 of the nipple 101a and slightly larger than the internal diameter of the internal projection 115 as shown in Fig. 4a.

The small-diameter part 122 of the insert 102 is of about the same diameter as the outside diameter of the pipe to be connected and, as shown in Fig. 3, it is provided with a circumferential groove 126 on its external surface. Another O ring is located in the groove 126 so that when a pipe H is held between the insert 102 and the collet 103, an airtight seal is formed between the internal surface of the pipe H and the external surface of the insert 102 (see Fig. 7).

The insert 102 is able to advance and retreat by sliding between the shoulder delimiting the large-diameter bore section 113 from the small-diameter bore section 114 and the internal projection 115.

The collet 103 is formed of a resilient synthetic resin and its outside diameter is slightly larger than the diameter of the pipe inserting port 110. Its external surface has a tapered part 132 directed towards the port 110 and corresponding to the tapered internal surface part 111 of the socket element 101b, while its internal surface is formed with a plurality of ribs 133. Furthermore the wall of the collet 103 is formed with slits 130, 134 which open alternately to respective ends thereof, as indicated in Fig. 6.

When this pipe joint is assembled, as shown in Fig. 3, the gap between the insert 102 and the collet 103 should be slightly smaller than the thickness of any pipe H to be inserted therein. Then, when the pipe H is inserted forcibly therebetween a holding force acts on the pipe H because of an elastic restorative force of the collet 103. In this state, when the pipe H is pulled back it is retained by the ribs 133 of the collet 103 and by the external surface of the insert 102 and, as shown in Fig. 7, the ribs 133 actually bite into the external surface of the pipe.

With this embodiment, after connection and upon pulling of the pipe H, as the insert 102 slides towards the port 110, the C type snap ring 107 located in the groove 106 of the insert 102 is compressed in diameter as it engages the internal projection 115, as shown in Figs. 4a to 4c. However, once beyond the projection 115 it returns to its uncompressed state through release of the engagement. In this respect, once a pipe is connected, the insert 102 is specifically intended to be slid towards the pipe insertion port 110 to the extent that the groove 106 passes beyond the end of the nipple 101a in the direction of the port 110 so that the C type snap ring 107 will take up its uncompressed state at a position closer to the pipe inserting port 110 than the internal projection 115. Once this has occurred, the insert 102 is prevented from sliding back even when a pushing force acts on the connected pipe H because the C type snap ring 107, still partially seated in the groove 106 cannot pass back past the projection 115. As a result, the connection between the pipe H and the joint 101 is stabilised.

The threaded connecting section at the opposite end of the nipple 101a, remote from the port 110, can in other embodiments be replaced by other connecting means.

As discussed in connection with the preceding embodiments, the nipple 101a need not have a throughbore divided into a large-diameter section 113 and a small-diameter section 114, and any suitable protrudent means may be provided about midway therealong to limit inward movement of the insert 102.

## Claims

1. A pipe joint comprising:
a cylindrical body (1, 2; 101) which has both ends open and is formed by two parts, a first part (1, 101a) providing a connecting section (13) at one end of the body and a second part in the form of a socket element (2; 101b) provided at the end of the first part remote from the connecting section and providing a pipe insertion port (20; 110) at the other end of the body, the second part also being provided with a tapering internal surface (21; 111) diminishing in diameter toward the pipe insertion port (20; 110),
a cylindrical insert (3; 102) slidably retained within the body (1, 2; 101), and
a collet (4; 103) disposed between the diminishing internal diameter surface (21; 111) and the insert (3; 102) in such a way as to slide freely to an fro, a gap remaining between the collet (4; 103) and the insert (3; 102) for reception and retention of the end margin of a pipe (H) when inserted therein through the insertion port (20; 110), **characterised in that** the insert (3; 102) is slidable within a predetermined range in the first part (1, 101a) which has an inwardly projecting part (15, 115) at its end facing the pipe insertion port (20, 110) to prevent removal of the insert (3; 102) therefrom.

2. A pipe joint according to claim 1 wherein the inwardly projecting part (15; 115) inclines toward the pipe insertion port (20; 110).

3. A pipe joint according to claim 1 or 2 wherein the first part (1, 101a) of the body has a through bore with a small-diameter section (10; 114) and a large-diameter section (11; 113) and the projecting part (15; 115) is located at the end of the large diameter section facing the pipe insertion port (20, 110).

4. A pipe joint according to claim 3 wherein the first part (1, 101a) of the body has a circumferential groove (12) on its external surface to which the socket element (2; 101b) is attached, and the insert (3; 102) is slidably retained in the large-diameter section (11; 113) with a sealing member (31) arranged therebetween, the insert itself having a through bore in alignment with the small-diameter bore section (10; 114) of the first part.

5. A pipe joint according to claim 3 or 4 wherein a C-type snap ring (107) is accommodated in a groove (106) in the external surface of the insert (102), the outside diameter of the snap ring (107), in its uncompressed state, being larger than the large-diameter bore section (113) of the first part (101a) thereby preventing the insert (102) sliding back into the first part once it has moved towards the pipe insertion port (110) sufficiently to release the snap ring (107) from the bore (113).

6. A pipe joint according to claim 5 wherein the outside diameter of the C type snap ring (107) in its uncompressed state is larger than the internal diameter of the internal projection (15).

7. A pipe joint according to claim 5 or 6 wherein the C type snap ring (107) has a circular section.

8. A pipe joint according to any preceding claim wherein the collet (4; 103) has an external circumferential surface capable of contacting the tapered internal surface (21; 111) of the socket element (2; 101b) and designed to be expandable and contractible in diameter while sliding in the socket element in the axial direction.

9. A pipe joint according to any preceding claim wherein the outside diameter of the collet (4; 103) is slightly larger than that of the pipe insertion port (20; 110) and the collet is provided with at least one longitudinal slit (42; 130).

10. A pipe joint according to any preceding claim wherein the socket element (2; 101b) is detachable from the first part (1; 101a) of the body.

## Patentansprüche

1. Rohrkupplung, bestehend aus:
einem zylindrischen an beiden Enden offenen Körper (1, 2; 101), der aus zwei Teilen gebildet ist, einem ersten Teil (1, 101a), der einen Verbindungsabschnitt (13) am einen Ende des Körpers bildet, und einem zweiten Teil, der an seinem von dem Verbindungsabschnitt des ersten Teiles entfernten Ende die Form eines Steckelementes (2; 101b) hat und am anderen Ende des Körpers eine Rohreinführungsöffnung (20; 110) bildet, wobei der zweite Teil außerdem eine konische Innenfläche (21; 111) aufweist, die sich in Richtung auf die Rohreinführungsöffnung (20; 110) im Durchmesser verjüngt;
einem zylindrischen Einsatz (3; 102), der innerhalb des Körpers (1, 2; 101) verschiebbar gehalten ist, und
einer Spannhülse (4; 103), die zwischen der Innenfläche (21; 111) mit sich verjüngendem Durchmesser und dem Einsatz (3; 102) dergestalt angeordnet ist, daß sie frei vor und zurückverschiebbar ist, wobei ein Spalt zwischen der Spannhülse (4; 103) und dem Einsatz (3; 102) für die Aufnahme und das Halten des Endrandes eines Rohres (H), das in die öffnung (20; 110) eingesetzt ist, verbleibt, **dadurch gekennzeichnet, daß** der Einsatz (3; 102) über einen vorbestimmten Bereich in dem ersten Teil (1, 101a) verschiebbar ist, der einen nach einwärts gerichteten Vorsprung (15; 115) an seinem der Einführungsöffnung (20; 110) gegenüberliegenden Ende aufweist, um einen Austritt des Einsatzes (3; 102) aus dieser öffnung zu verhindern.

2. Rohrkupplung nach Anspruch 1, bei welcher der einwärts gerichtete Vorsprung (15; 115) in Richtung auf die Rohreinführungsöffnung (20; 110) geneigt ist.

3. Rohrkupplung nach Anspruch 1 oder 2, bei welcher der erste Teil (1, 101a) des Körpers eine Durchgangsbohrung mit einem Abschnitt (10; 114) mit kleinem Durchmesser und einem Abschnitt (11; 113) mit großem Durchmesser aufweist, und bei welcher der Vorsprung (15; 115) am Ende des Abschnittes mit dem großen Durchmesser angeordnet ist, das der Rohreinführungsöffnung (20, 110) zugekehrt ist.

4. Rohrkupplung nach Anspruch 3, bei welcher der erste Teil (1, 101a) des Körpers auf seiner Außenseite, auf welche das Steckelement (2; 101b) aufgebracht ist, eine Umfangsnut (12) aufweist, und der verschiebbare Einsatz (3; 102) in dem Abschnitt (11; 113) mit großem Durchmesser mit einem dort angeordneten Dichtungsring (31) zurückgehalten ist, wobei der Einsatz eine Durchgangsbohrung aufweist, die mit dem Bohrungsabschnitt (10 ; 114) kleinen Durchmessers des ersten Teiles fluchtet.

5. Rohrkupplung nach Anspruch 3 oder 4, bei welcher ein C-förmiger Schnappring in einer Nut (106) in der Außenfläche des Einsatzes (102) angeordnet ist, wobei der Außendurchmesser des Schnappringes (107) in nicht zusammengepreßtem Zustand größer ist als der Bohrungsabschnitt (113) mit großem Durchmesser des ersten Teiles (101a), wodurch der Einsatz (102) daran gehindert ist, in den ersten Teil zurückzugleiten, wenn er einmal ausreichend weit in Richtung auf die Rohreinführungsöffnung (110) bewegt ist, um den Schnappring (107) aus der Bohrung (113) freizugeben.

6. Rohrkupplung nach Anspruch 5, bei welcher der Außendurchmesser des C-förmigen Schnappringes (107) in seinem nicht zusammengepreßten Zustand größer ist als der Innendurchmesser des inneren Vorsprunges (15).

7. Rohrkupplung nach Anspruch 5 oder 6, bei welcher der C-förmige Schnappring (107) einen kreisförmigen Querschnitt hat.

8. Rohrkupplung nach einem der vorangehenden Ansprüche, bei welcher die Spannhülse (4; 103) eine äußere Umfangsfläche aufweist, die mit der geneigten Innenfläche (21; 111) des Steckelementes (2; 101b) in Kontakt treten kann und so geformt ist, daß sich ihr Durchmesser vergrößern oder verkleinern kann, während sie sich in Axialrichtung in dem Steckelement verschiebt.

9. Rohrkupplung nach einem der vorangehenden Ansprüche, bei welcher der Außendurchmesser der Spannhülse (4; 103) etwas größer ist als derjenige der Rohreinführungsöffnung (20; 110) und die Spannhülse mit mindestens einem Längsschlitz (42; 130) versehen ist.

10. Rohrkupplung nach einem der vorangehenden Ansprüche, bei welcher das Steckelement (2; 101b) von dem ersten Teil (1; 101a) des Körpers abnehmbar ist.

## Revendications

1. Raccord pour tuyau comprenant :
- un corps cylindrique (1, 2; 101) possédant des extrémités ouvertes respectives et formé de deux parties, une première partie (1, 101a) constituant une section de raccordement (13) à une extrémité du corps et une seconde partie sous la forme d'un élément de manchon (2; 101b) prévue à l'extrémité de la première partie éloignée de la section de raccordement et constituant un orifice d'insertion de tuyau (20; 110) à l'autre extrémité du corps, la seconde partie étant aussi munie d'une surface interne tronconique (21; 111) diminuant en diamètre en direction de l'orifice d'insertion de tuyau (20; 110);
- un insert cylindrique (3; 102) maintenu coulissant à l'intérieur du corps (1, 2; 101); et
- un collet (4; 103) placé entre la surface de diamètre interne en réduction (21; 111) et l'insert (3; 102) de façon à coulisser librement d'avant en arrière, un intervalle subsistant entre le collet (4; 103) et l'insert (3; 102) pour la réception et le maintien du bord d'extrémité d'un tuyau (H) lorsqu'il est inséré à travers le port d'insertion (20; 110),
raccord **caractérisé en ce que** l'insert (3; 102) est monté coulissant dans un intervalle prédéterminé dans la première partie (1, 101a), possédant une partie en projection vers l'intérieur (15, 115) sur son extrémité faisant face à l'orifice d'insertion de tuyau (20, 110) pour y empêcher un enlèvement de l'insert (3; 102).

2. Raccord pour tuyau selon la revendication 1, dans lequel la partie en projection vers l'intérieur (15, 115) est inclinée en direction de l'orifice d'insertion de tuyau (20, 110).

3. Raccord pour tuyau selon la revendication 1 ou 2, dans lequel la première partie (1, 101a) du corps possède un alésage traversant présentant une section de petit diamètre (10; 114) et une section de grand diamètre (11; 113) et dans lequel la partie en projection (15; 115) est située sur l'extrémité de la section de grand diamètre faisant face à l'orifice d'insertion de tuyau (20, 110).

4. Raccord pour tuyau selon la revendication 3, dans lequel la première partie (1, 101a) du corps possède une gorge circonférencielle (12) sur sa surface externe à laquelle est fixé l'élément de manchon (2; 101b) et dans lequel l'insert (3; 102) est maintenu coulissant dans la section de grand diamètre (11; 113), une pièce d'étanchéité (31) étant interposée entre ces derniers, l'insert possédant lui-même un alésage traversant aligné avec la section d'alésage de petit diamètre (10; 114) de la première partie.

5. Raccord pour tuyau selon la revendication 3 ou 4, dans lequel un anneau à encliquetage du type C (107) est logé dans une gorge (106) de la surface externe de l'insert (102), le diamètre extérieur de l'anneau à encliquetage (107) étant supérieur, à son état non comprimé, à la section d'alésage de grand diamètre (113) de la première partie (101a), empêchant ainsi l'insert (102) de coulisser vers l'arrière dans la première partie une fois qu'il s'est déplacé en direction de l'orifice d'insertion de tuyau (110) de façon suffisante pour libérer l'anneau à encliquetage (107) de l'alésage (113).

6. Raccord pour tuyau selon la revendication 5, dans lequel le diamètre extérieur de l'anneau à encliquetage du type C (107) est supérieur, à son état non comprimé, au diamètre interne de la projection interne (15).

7. Raccord pour tuyau selon la revendication 5 ou 6, dans lequel l'anneau à encliquetage du type C (107) possède une section circulaire.

8. Raccord pour tuyau selon l'une quelconque des revendications précédentes, dans lequel le collet (4; 103) possède une surface circonférencielle externe pouvant entrer en contact avec la surface interne conique (21; 111) de l'élément de manchon (2; 101b) et est conçu pour pouvoir se dilater et se contracter en diamètre lors d'un coulissement dans l'élément de manchon en direction axiale.

9. Raccord pour tuyau selon l'une quelconque des revendications précédentes, dans lequel le diamètre extérieur du collet (4, 103) est légèrement plus grand que celui de l'orifice d'insertion de tuyau (20; 110) et dans lequel le collet est muni d'au moins une fente longitudinale (42, 130).

10. Raccord pour tuyau selon l'une quelconque des revendications précédentes, dans lequel l'élément de manchon (2; 101b) peut être libéré de la première partie (1; 101a) du corps.
